# EUROPEAN PATENT APPLICATION

(11) **EP 1 701 419 A1**
(43) Date of publication of application: **13.09.2006**
(21) Application number: 05075563.6
(22) Date of filing: 08.03.2005
(51) Int. Cl.: H01T 13/54

(54) **A pre-chamber sparkplug, and combustion engine including a pre-chamber sparkplug**

(71) Applicant: Veenstra- Glazenborg B.V., 9675 EN Winschoten (NL)
(72) Inventor: Honig, Timon, Hendrik, 1851 AR Heilo (NL)
(74) Representative: Winckels, Johannes Hubertus F.

(57) **Abstract**

A pre-chamber sparkplug (1) mountable in a combustion engine. The pre-chamber sparkplug (1) has a first electrode (2) which is exposed with a first spark surface (22) in a pre-chamber (7). A second electrode (3) is exposed with a second spark surface (32) in said pre-chamber (7). The electrodes (2,3) are connectable to an electrical power source for applying a voltage difference between said electrodes (2,3). A spark gap (4) separates said first spark surface (22) and said second spark surface (32). The sparkplug has a pre-chamber member (70) including: a pre-chamber wall (72) defining said pre-chamber (7), and at least one passage (711,712) in said pre-chamber wall (72). The passage (711,712) connects said pre-chamber (7) with a combustion chamber of a combustion engine in a mounted condition of said pre-chamber sparkplug (1). In the mounted condition, the pre-chamber member (70) projects into the combustion chamber.

## Description

### FIELD AND BACKGROUND OF THE INVENTION

The invention relates to a pre-chamber sparkplug. The invention also relates to a combustion engine provided with a pre-chamber sparkplug.

It has been known for a long time that the performance of a sparkplug can be improved by providing the sparkplug near its electrodes with a pre-chamber. The pre-chamber is in communication with a main combustion chamber of an engine via one or more orifices in a pre-chamber wall. In the pre-chamber, fuel can be burned. The burning fuel causes a pressure-build up which propels the flame front, that is the leading edge of a burning air-fuel charge, from the pre-chamber via the orifices into the main combustion chamber

For example, from T. Lembeck, W. Isendahl, "Berechnung, Konstruktion, und Fabrikation von Automobil-Motoren", second edition Berlin 1911 p. 564-569, a sparkplug mounted in a pre-chamber is known. A tube-shaped element which defines the pre-chamber, is mounted in a threaded hole in a casing of a main combustion chamber of an engine. The tub-shaped element has a cylindrical shape, and a cylindrical, narrowed end portion. The narrowed end portion is provided on its cylindrical outside with a thread extending in circumferential direction along the outside surface of the end portion. By means of the thread, the pre-chamber can be fixated on the main combustion chamber casing. The narrow end portion has a passage extending in a longitudinal direction of the tube-shaped element, which allows a communication between the pre-chamber and the main combustion chamber. A sparkplug is mounted in a threaded hole of the tube-shaped element. The sparkplug includes a central electrode and a ground electrode. The central electrode is covered by an insulator housing which separates the central electrode from the ground electrode. At an exposed end, the central electrode is not covered by the housing and faces an exposed arm-shaped end part of the ground electrode. The exposed ends are positioned in the pre-chamber. By applying a suitable voltage to the central electrode, a spark can be generated between a spark surface on the exposed end of the central electrode and a spark surface on the arm-shaped end of the ground electrode. The spark ignites fuel present in the pre-chamber, which causes an increase of pressure in the pre-chamber. The pressure increase causes a flow of fuel, air and exhaust gasses from the pre-chamber into the main combustion chamber via the passage in the tube shaped element. The flow propels the flame front out of the pre-chamber, and disperses the flame front in the main combustion chamber.

In relatively recent times, the spatkplug-pre-chamber configuration has been rediscovered. For example, the International Patent publication WO 85/02066 describes a sparkplug including a pre-chamber member. The pre-chamber member is mounted in a threaded hole in a wall of a main combustion chamber of an engine. The pre-chamber member defines a tube-shaped pre-chamber. The pre-chamber member includes a wall section which closes off a main combustion chamber side end of the pre-chamber. The wall section lies level with the wall of the main combustion chamber. Thus, the pre-chamber member does not project into the main combustion chamber, and the wall section is the only part of the pre-chamber member exposed in the inside of the main combustion chamber. The wall section is formed as a separate annular member provided with at least one orifice having a smaller cross-section than the pre-chamber. The pre-chamber member has a threaded hole at an end opposite to the wall section. A central electrode surrounded by isolation material extends from the threaded hole into the pre-chamber. The central electrode is exposed in the pre-chamber. At a distance from the wall section, the pre-chamber member has a projection towards the pre-chamber, which forms a mass electrode of the sparkplug.

However, despite the renewed interest in sparkplug pre-chamber configurations, the known pre-chamber sparkplugs have several disadvantages. For example, the known pre-chamber sparkplugs have a long operating cycle. Furthermore, the known pre-chamber sparkplugs do not provide a uniform distribution of the flame front into the main combustion chamber.

### SUMMARY OF THE INVENTION

It is one object of the invention to provide a pre-chamber sparkplug which in operation provides a more uniform distribution of the flame front into the main combustion chamber. Therefore, according to an aspect of the invention, a pre-chamber sparkplug according to claim 1 is provided.

Such a pre-chamber sparkplug has a more uniform distribution of the flame front into the main chamber, because the pre-chamber projects into the main chamber in a mounted condition in which the sparkplug is mounted in the pre-chamber. Accordingly, the propelled flame front distributes more uniformly into the main chamber during operation, because the flame front can be dispersed longitudinally, as well as sideways with respect to the sparkplug. Therefore, the flame front can be dispersed more uniformly into the main chamber, compared to the prior art pre-chambers which are positioned levelled with the main chamber casing and thus provide only a limited dispersion of the flow in a sideways direction.

Furthermore, fresh fuel, oxygen and other fluids can enter more easily into the pre-chamber, because the flow of fuel can enter from an longitudinal direction of the pre-chamber, as well as sideways, e.g. from a radial direction of the pre-chamber.

The invention further provides a combustion engine according to claim 20. In such a combustion engine, the flame will be distributed more uniformly into the combustion chamber, because the pre-chamber projects into the combustion chamber..

Specific embodiments of the invention are set forth in the dependent claims. It should be noted, however, that the subject matter of the dependent claims may be used outside the scope of the independent claims.

### BRIEF DESCRIPTION OF THE DRAWINGS

Further details, aspects and embodiments of the invention will be described with reference to the attached drawings, by way of example only.
FIG. 1A schematically shows a perspective, cutaway view of a first example of an embodiment of a pre-chamber sparkplug according to the invention.
FIG. 1B schematically shows a perspective view of the first example.
FIG. 2 schematically shows a detailed cross-sectional view of the pre-chamber side of the example shown in fig 1A and B.
FIG. 3 schematically shows a bottom-view of a second example of the pre-chamber part of an embodiment of a pre-chamber sparkplug.
FIG. 4 schematically shows a cross-section along the line I-I in Fig 3.
FIG. 5 schematically shows a bottom-view of a third example of the pre-chamber part of an embodiment of a pre-chamber sparkplug.
FIG. 6 schematically shows a cross-section of the third example along the line II-II in FIG. 5.
FIGs. 7-9 schematically show cross-sectional views of examples of electrode configurations which may be used in a pre-chamber sparkplug according to the invention.
FIG. 10 schematically shows a cross-sectional view of a part of a spark bridge.
FIG. 11A-B schematically show examples of power connectors suitable for use in a sparkplug according to the invention.
FIG. 12A-B schematically show examples of first electrodes suitable for use in a sparkplug according to the invention.
FIG. 13A-D schematically show cross-sectional views of examples of second electrodes provided on a pre-chamber member.
FIG. 14A-H schematically show examples of shapes of second electrodes suitable for use in a sparkplug according to the invention.
FIG. 15A-C schematically show examples of an insulator body suitable for use in a sparkplug according to the invention.
FIG. 16A-B schematically show examples of pre-chamber members suitable for use in a sparkplug according to the invention.
FIG. 17 schematically shows a cross-sectional view of a combustion engine including a pre-chamber sparkplug.

### DETAILED DESCRIPTION

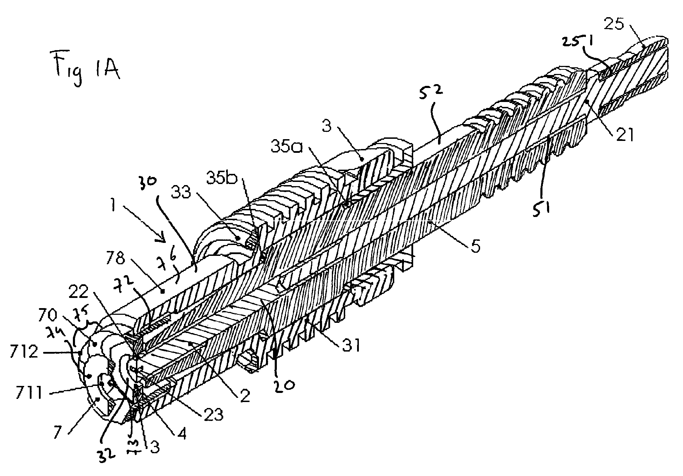

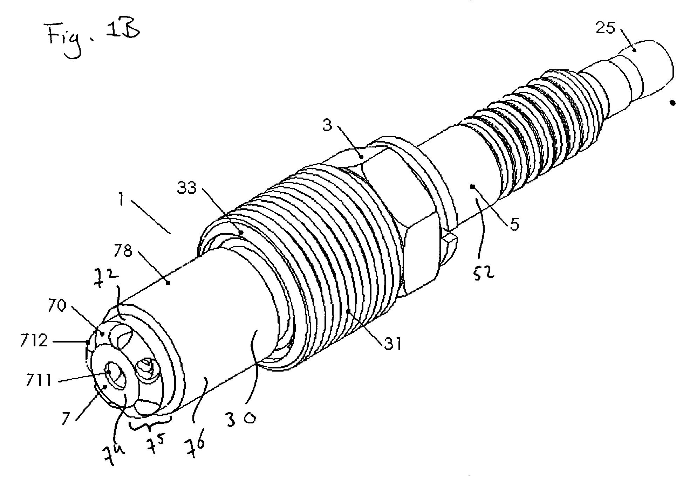

FIG. 1A and 1B schematically shows an example of a pre-chamber sparkplug 1 which includes a first electrode 2, and a second electrode 3,4 made of a suitable conducting material. The electrodes 2,3 are electrically insulated from each other, in this example by means of an insulator body 5 made of a suitable material, such as glass, porcelain or ceramics. However, the electrodes 2,3 may be electrically insulated in any other suitable manner, for example by means of an empty space between the electrodes 2,3.

The electrodes 2,3 have respective first and second electrode bodies 20,30 which extend at least partially into a pre-chamber 7, and are exposed in the pre-chamber 7. The exposed parts of the electrode bodies 20,30 are, from hereon, respectively referred to as the first spark surface 22 and the second spark surface 32. The spark surfaces 22,32 are separated by a spark gap 4. In this example, the first electrode 2 is connectable to a power source via a power connector 25, as known per se in the art of sparkplugs, and for the sake of brevity not described in further detail. When the sparkplug 1 is mounted in a combustion chamber, the second electrode 3 of this example is electrically connected to the casing of the combustion chamber, and hence acting as ground.

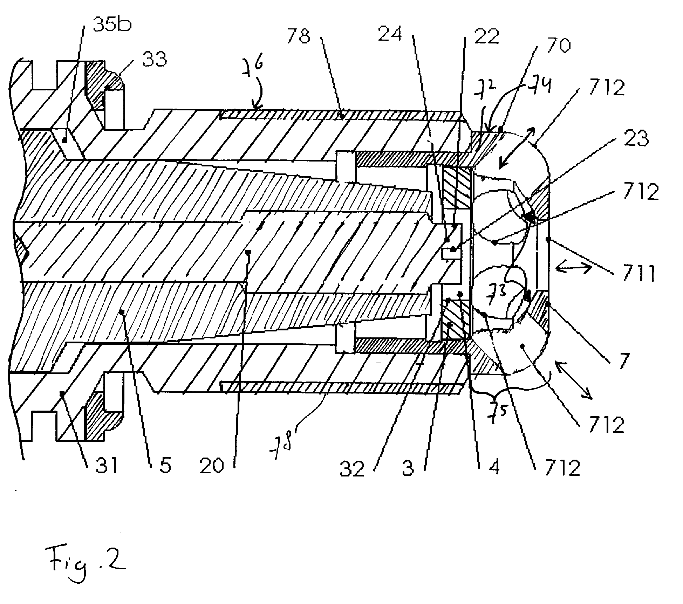

In the example of FIGs. 1 and 2, the power connector 25 abuts on an end of the insulator 5 distant from the spark-surfaces 22,32. The power connector 25 and the isolator 5 have a hollow core 251 resp. 51, positioned in line. The first electrode body 20 extends through a part of the hollow core 51 of the insulator 5. A receptacle pin 21 extends through the core 251 of the power connector 25 and the core 51 of the insulator 5, thus mechanically connecting the power connector 25 to the insulator 5. The end of the receptacle pin 21 touches the first electrode body 20. The power connector 25 is thus electrically connected to the first electrode 2.

In the example of FIGs. 1 and 2, the second electrode body 30 includes an electrically conducting enclosure 31. The electrically conducting enclosure 31 encloses a pre-chamber side part of an exterior surface 52 of the insulator 5, leaving a contact side part of the exterior surface 52 of the insulator 5 exposed to the environment of the pre-chamber sparkplug 1. The enclosure 31 projects beyond the spark surfaces 22,32 and forms a continuous extension of a pre-chamber member 70. At the pre-chamber side, the insulator 5 has a frusto-conical shape. The frust-conical shape generates an advantageous degree of heat when the spark-plug is in operation.

Inner sealing rings 35a and 35b are provided between the enclosure 31 and the insulator 5. Thereby, leakage of fuel and/or combustion gasses through the spark-plug out of the combustion chamber is prevented. On the exterior of the enclosure 31, an exterior sealing ring 33 is provided, which in the mounted condition prevents leakage of fuel and/or combustion gasses through the passage between a wall of the combustion chamber and the sparkplug 1.

The sparkplug 1 further has a pre-chamber member 70 with a pre-chamber wall 72. The pre-chamber wall 72 defines the pre-chamber 7. In the example of FIGs. 1 and 2, the pre-chamber wall 72 has an inner surface 73 which faces the pre-chamber 7, and lies adjacent to the pre-chamber 7. The pre-chamber wall 72 further has an exterior surface 74 which faces towards the environment of the pre-chamber sparkplug 1 e.g. a combustion chamber. In the example of FIGs. 1 and 2, the pre-chamber wall 72 includes at least a part of the second electrode 3. More specific, the pre-chamber wall 72 is a part of the second electrode body 30, which is electrically in contact with the other parts of the second electrode 3.

The pre-chamber member 70 is further provided with one or more passages 711,712 which extend from the inner surface 73 to the exterior surface 74. The passages 711,712 provide a connection between the pre-chamber 7 and an environment outside the pre-chamber 7, such as, in the mounted condition, a combustion chamber 100 of an engine, for example. Via this connection, fluids, such as air, (burning) fuel, and exhaust gasses, can flow from the pre-chamber 7 into the main combustion chamber or vice versa.

The pre-chamber sparkplug 1 operates as follows. At the beginning of an operating cycle of the pre-chamber sparkplug 1, a voltage difference is applied over the first and second electrode 2,3, which is sufficient to induce sparking between the first spark surface 22 and the second spark surface 32, i.e. in the spark gap 4. The sparking ignites fuel present in the spark gap 4. A flame front of burning fuel then propagates from the spark gap 4 to other parts of the pre-chamber 7. The burning fuel causes a pressure build up in the pre-chamber 7. Due to the build-up pressure, a pressurised flow of fluids, e.g. a mixture of air, exhaust gasses, and (burning) fuel, will occur from the pre-chamber 7 into the main combustion chamber 100. This flow will propel the flame front out of the pre-chamber 7, into the combustion chamber via the passages 711,712. The propelled flame front will ignite fuel present in the combustion chamber.

The ignited fuel in the main combustion chamber 100 causes pressure increase which moves a piston, as explained below with reference to FIG. 17. After the fuel has been burned, exhaust gases are removed from the combustion chamber and the pre-chamber 7, while fresh fuel, oxygen and other fluids are brought into the combustion chamber and the pre-chamber 7. When the combustion chamber and the pre-chamber 7 are supplied with sufficient fresh fluids, a new operating cycle can be started.

In the example of FIGs. 1 and 2, the exterior surface 74 has a coverable part 76 which, in the mounted condition, is covered by a combustion chamber wall 102, as is shown in the example of FIG. 17. The coverable part 76 may be provided sunk in the combustion chamber wall 102 and be provided with means for mounting the pre-chamber spark-plug 1 to the combustion chamber wall. In the example of FIGs 1 and 2, the coverable part is provided with a thread 78 by means of which the sparkplug 1 can be mounted in the casing of a main combustion engine. The exterior surface 74 further has an exposable part 75 adjacent to the coverable part 76. In the mounted condition of the spark-plug 1, this exposable part 75 is exposed in the main combustion chamber 100 of an engine, as shown in more detail in FIG. 17.

In the example of FIGs. 1 and 2, the exposable part 75 includes the top surface of the pre-chamber wall 72, and a part of the longitudinal side of the pre-chamber wall 72 adjacent to the top surface. In the mounted position, the exposable part 75 projects in the main combustion chamber 100 of the combustion engine, as shown in FIG. 17. Accordingly, the propelled flame front distributes more uniformly into the main chamber during operation, because the flame front can be dispersed into an longitudinal direction, as well as sideways with respect to the sparkplug as indicated with the arrows in FIGs. 2 and 17. Furthermore, fresh fuel, oxygen and other fluids can enter more easily into the pre-chamber, because the flow of fuel can enter from an axial direction of the pre-chamber, as well as sideways, e.g. from a radial direction of the pre-chamber.

The passages 711,712 between the pre-chamber 7 and the outside environment may have any suitable shape and configuration. In the example of FIGs. 1 and 2, the passages 711,712 are circular and are positioned in an arrangement which includes a central passage 711 in the extended of the longitudinal axis of the first electrode 2. At the transition of the top surface into the longitudinal side of the pre-chamber wall 72, an annular arrangement of side passages 712 is present. The axial centre of this annular arrangement coincides with the central passage 711.

The side passages 712 are positioned with their axial direction diverging. The axial direction of the central passage 711 lies in parallel with the longitudinal axis of the pre-chamber 7. Due to the diverging arrangement, fluids will be injected into the main combustion chamber in a conical pattern after ignition, and the flame front propelled by these flowing fluids will be distributed over the whole compressed combustion chamber 100 of the engine.

In the example of FIGs. 1 and 2, the passages 711,712 are positioned with their longitudinal directions diverging but at the same angle with respect to the longitudinal direction of the sparkplug 1. As an alternative, the passages 711.712 may be positioned at differing angles, for example in a (semi)random pattern. Such orientation increases, in operation, the vortex behaviour in the fluid flow, and accordingly the propagation of the flame front. This improves the combustion in the main combustion chamber. Also, other aspects of the passages 711,712 can may be used to increase the vortex behaviour. For instance, the passages 711,712 may differ in other aspects, such as diameter, or shape. Furthermore, the axial direction of the passages 711,712 may be oriented (partially) tangential with respect to the annular arrangement to improve the vortex behaviour.

The pre-chamber member 70 be implemented in any manner suitable for the specific implementation. For example, the pre-chamber member 70 may be an integral part of the sparkplug 1, and can therefore be mounted in a combustion chamber in a simple manner compared to the pre-chamber spark-plugs according to the prior art. The prior art pre-chamber sparkplugs have a separate pre-chamber member. Accordingly, mounting such a pre-chamber sparkplug is complex, because the pre-chamber member and the sparkplug have to be mounted separately in the combustion chamber of an engine. An integral pre-chamber member 70 can be implemented in any suitable manner. For instance in the example of FIGs. 1 and 2, the pre-chamber member 70 forms an integral extension of the second electrode body 30. The pre-chamber member 70 extends, in a direction from a pre-chamber side end of the pre-chamber sparkplug 1 towards the power connector 25 beyond the spark surfaces 22,3, and turns into the enclosure 31.

Furthermore, the components of the pre-chamber member 70 may for example be formed as a single body, or comprise two or more separate components. In the examples of FIGs. 1 and 2 and of FIG. 16A for instance, the pre-chamber member 70 comprises separate components, e.g. a cap 79 and a hollow member 80. The hollow member 80 has a hollow, substantially cylindrical shape with open axial ends 82,83. In this example, the cap 79 has a mushroom-like shape with a cylindrical base and an end part which closes off the cylindrical base at one axial end. The outside diameter of the end part is larger than the outside diameter of the cylindrical base and the inside diameter of the hollow member 80, but smaller than the outside diameter of the hollow member 80. At a pre-chamber side end 82,83 of the hollow member 80, the cylindrical base of the cap 79 is mounted on the inside of the hollow member 80. The cylindrical base has an outside diameter which is substantially equal to the inside diameter of the hollow member 80, and is fixated with respect to the hollow member 80, in this example by means of a thread 81.

In the example of FIG. 16B, the pre-chamber member also has a hollow cylindrical member 80 and a cap 79. However, these components are made of one piece, e.g. by hollowing a massive cylindrical object and providing passages at suitable positions in the object. Thereby, the entire pre-chamber member 70 can be manufactured in one processing stage, and the costs of manufacturing are reduced.

In the example of FIGs. 1 and 2, the first electrode 2, which may also be referred to as the central electrode, includes a first electrode body 20. The first electrode body 20 has a shaft-like shape, and more specific, in this example the first electrode body 20 has an elongated cylindrical shape. A pre-chamber side end of the electrode body 20 is exposed. On this exposed end, the first spark surface 22 is provided.

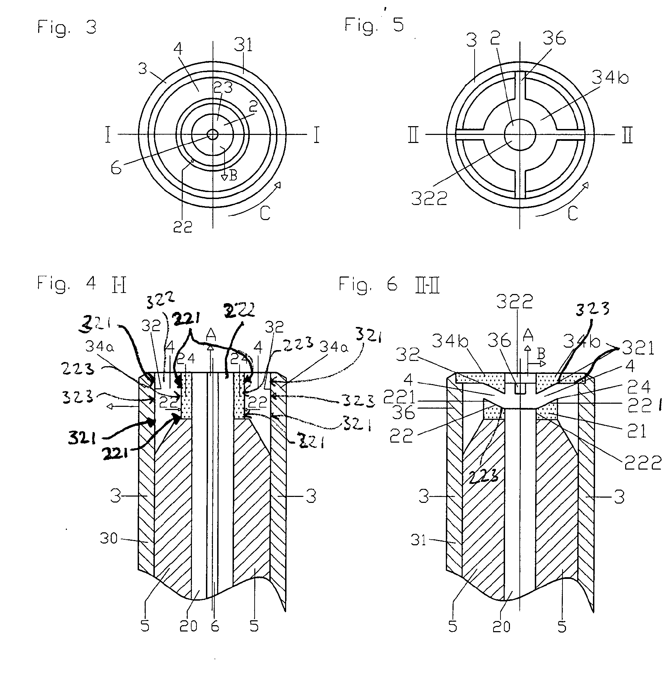

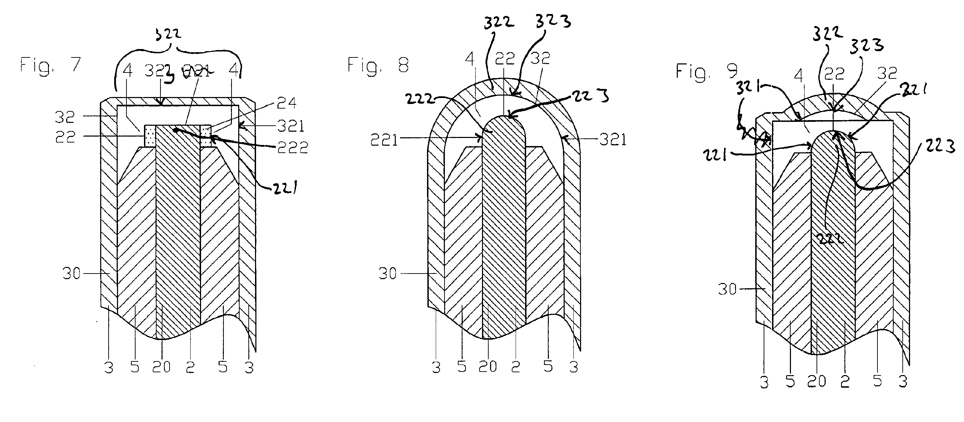

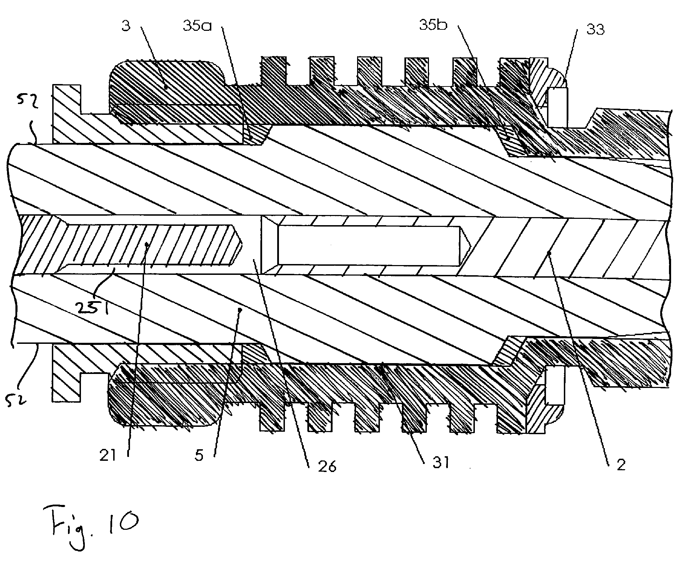

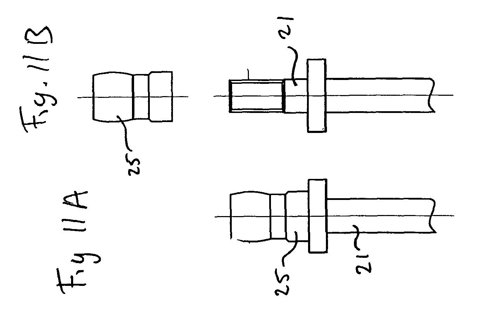

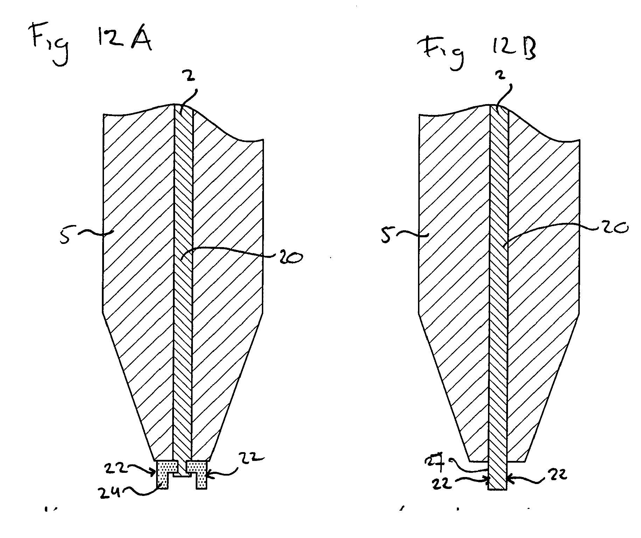

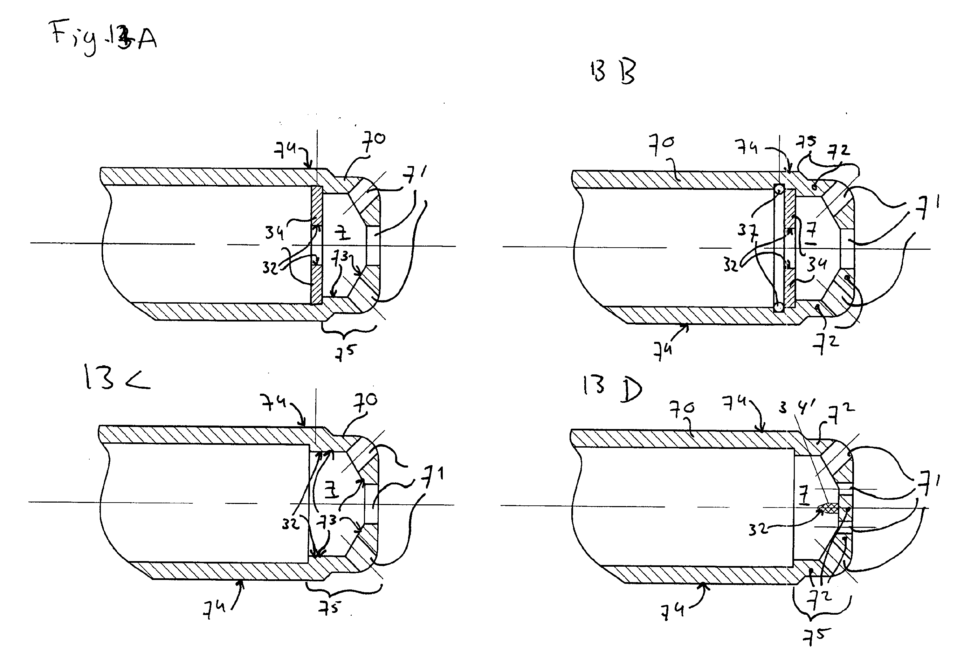

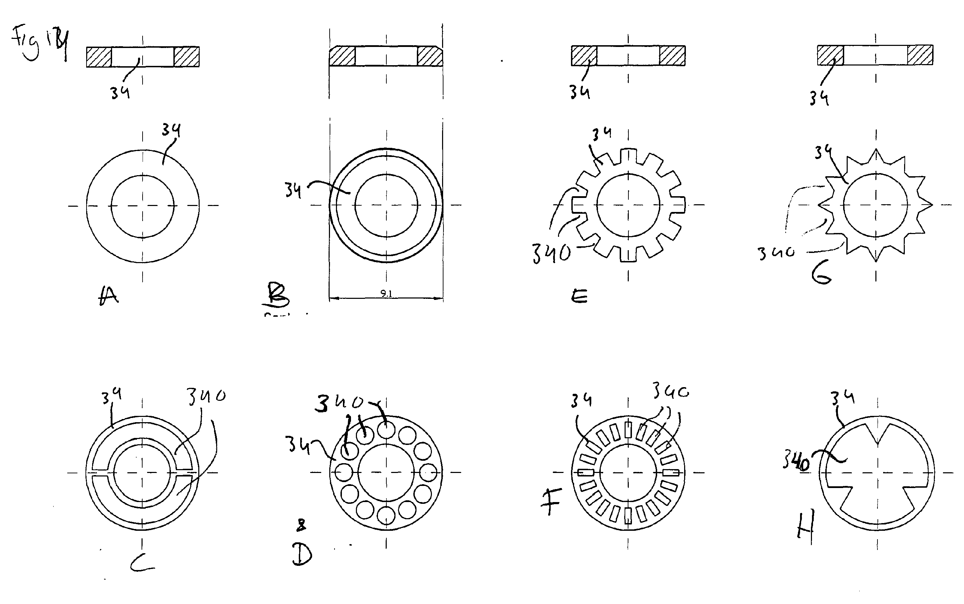

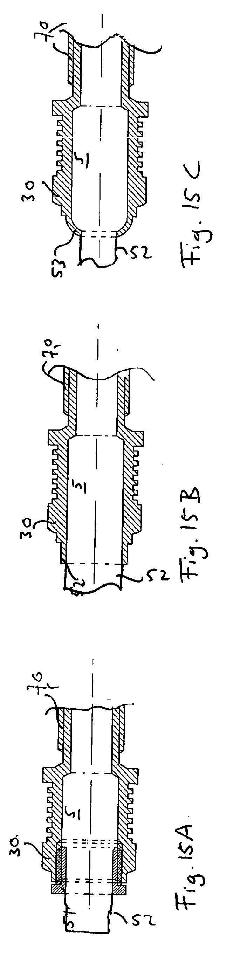

The first spark surface 22 and the second spark surface 32 may be implemented in any manner suitable for the specific implementation. The first spark surface 22 and/or the second spark surface 32 may for instance be flat or be curved in, depending on the specific implementation. In FIGs. 8 and 9, the spark surfaces 22,32 are curved. In the example of FIGs. 1A,1B and 2, the first and second spark surface 22,32 are curved in one direction and have the shape of the inside resp. outside of a cylinder. In the example of FIGs 1A,1B and 2 in a radial direction and in a tangential direction of an annular edge surface 221,321. Also, the annular edge surface 221,321 may for example enclose an inner surface (as shown in e.g. FIGs. 1A,1B and 2) or enclose an open inner area (as shown e.g in FIGs. 3 and 4).

The spark surfaces 22,32 are positioned on different sides of the spark gap 4 diametrically opposite to each other. The first and second spark surface 22,32 both include an annular edge surface 221,321 at respective axial ends of the cylinder. The annular edge surfaces of the respective spark surface 22,32 lie adjacent to an annular inner surface.

Due to the annular edge surface 221,321 and diametrical position, the spark surfaces 22,32 of the electrodes 2,3 will wear uniformly. In case a voltage is applied over the electrodes 2,3, sparks will be emitted between the electrodes 2,3. This will occur in the areas of the spark surfaces 22,32 in which the distance between the spark surfaces 22,32 is the smallest, since in those areas the resistance is lowest. In theory, due to the annular shape and diametrical opposite position of the first and second spark surface 22,32 all areas of the (annular parts of the) first and second spark surface 22,33 are equally spaced, In practice however, this will not be the case due to imperfections, e.g. in the shape or positioning of the spark surfaces 22,32. Accordingly, some of those areas will be closer to the second spark surface 32 than other areas. Due to the sparks, the respective parts of the spark surfaces 22,32 will wear to a certain extend. This wear causes an increase in the distance between those areas. However, because of the annular shape, other parts of the spark surfaces 22,32 will become closest to each other. Accordingly, at those parts, the resistance becomes the lowest, and sparks will be emitted. Thus, the location of the spark will shift during use, resulting in uniform wear, and accordingly, increased lifetime of the sparkplug 1.

The pre-chamber sparkplug 1 is also less sensitive to deformation or movement of the electrodes 2,3 relative to each other, because of the annular shape. In case of deformation or movement of the spark surfaces 22,32, the distance between the electrodes 2,3 will increase for some areas of the spark surfaces 22,32, but will be reduced for other areas. Accordingly, the distance between other areas of the spark surfaces 22,32 will become the smallest and sparks will be emitted there. Thus, the pre-chamber sparkplug 1 will still function.

Also, due to the annular edge surface 221,321 of the first and second spark surfaces 22,32, several areas of the first and second spark surfaces 22,32 will be close enough to allow sparking. Thus, at several areas sparks are induced in operation. Thereby, fuel will be ignited simultaneous at several positions in the pre-chamber 7.

In the example of FIGs. 1 and 2, the second electrode 3 includes has a releasable annular member 34 mounted in the pre-chamber 7. The annular member 34 is pressed in the inside of the pre-chamber member 70. The releasable annular member 34 is positioned near the passages 71. A radially outwards facing surface 341 of the releasable annular member 34 abuts on the pre-chamber wall 72. The second spark surface 32 lies on the radially inwards facing surface of the annular member 34.

Depending on the specific implementation, the position of the spark surfaces 22,32 may be fixated. Alternatively, as in the example of FIG. 1A and 1B the position of the first spark surface 22 may be adjustable with respect to the second spark surface 32. In this example, the insulator body 5 is mounted at the inside of the, cylindrically shaped, electrically conducting enclosure 31. The insulator body 5 can be displaced with respect to the pre-chamber 70 by changing the thickness of the inner sealing ring 35b. Movement of the first electrode 2 in a direction from the connector 25 towards the pre-chamber 7 is inhibited by means of an thickening of the part of the receptacle pin outside the isolation core 51. The thickened part has a diameter larger than the diameter of the hollow insulator core 51, thus fixating the receptacle pin (and electrode bode 20 connected thereto) in this direction. Accordingly, if the isolator body 5 is displaced with respect to the second electrode 3, the first electrode 2 is displaced, and the position of the spark surfaces 22,32 is adjusted.

Due to the adjustable position of spark surfaces 22,32 relative to each other, the sparkplug is less sensitive to a displacement of the electrodes 2,3. In case of a displacement, e.g. the thickness of inner sealing ring 35b can be changed, until the position of the spark surfaces 22,32 with respect to each other is such that sparks can be emitted. It should be noted, that the adjustable position of the spark surfaces 22,32 with respect to each other can be obtained in any suitable manner, and the invention is not limited to the shown example. For instance, the position of both spark surfaces 22,32 can be adjustable with respect to the other parts of the sparkplug 1 or otherwise.

In the example of FIGs. 3 and 4, the first and second spark surface 22,32 are both shaped like a cylinder surface. The first spark surface 22 is facing radially outwards, and the second spark surface 32 is facing radially inwards. Thus, both the first spark surface 22 and the second spark surface 32 include annular edge surfaces at respective axial ends of the cylinder, and an annular inner surface connecting the edge surfaces. The first and second spark surfaces both enclose an open inner area 222,322. The cylindrical first and second spark surface 22,32 are placed concentrically.

The first spark surface 22 and the second spark surface 32 have an overlap in an axial direction of the first spark surface 22, shown in FIG. 3 with the arrow denoted A, and are spaced in a radial direction B by the spark gap 4. The spark surfaces 22,32 are in parallel with a longitudinal direction of the respective electrode 2,3.

The first and second spark surface 22,32 are provided on an exposed longitudinal extension of a body 20,30 of the respective electrode 2,3. The second spark surface 32 lies on a hollow cylindrical part 34a, which forms a continuous extension of the second electrode body 30 of the second electrode 3. The first spark surface 22 lies on an annular member 24 provided on an exposed end of the first electrode body 20.

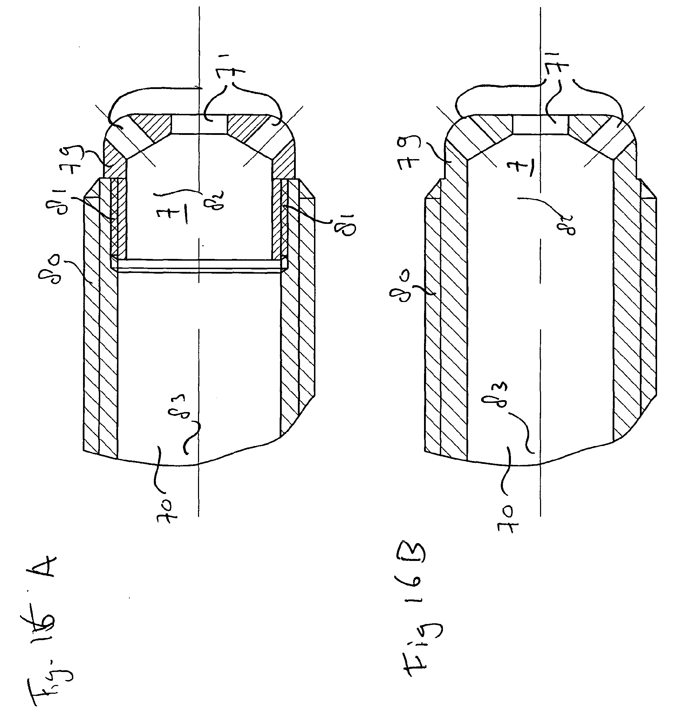

In the example of FIGs. 5 and 6, the first spark surface 22 and the second spark surface 32 have an overlap in a radial direction of the first spark surface 22, shown with the arrow B. In axial direction, the spark surfaces 22,32 are spaced by the spark gap 4. The spark surfaces 22,32 are positioned at an angle with respect to the longitudinal direction. The first and second spark surface 22,32 are each provided with an annular edge surface 221,321 and extends in a radial direction. The annular edge surfaces 221,321 lie adjacent to annular inner surfaces 223,323. The first spark surface 22 encloses an open inner area 222. The second spark surface 32 encloses an open inner area 322.

In FIGs. 5 and 6, the first spark surface 22 lies on an annular member 24 provided on an exposed end of the first electrode body 20. The open inner area 222 is filled with a top surface of a cylindrical first electrode body 20. The second spark surface 32 is provided on a disk shaped part 34b of the second electrode 3. The second electrode body 30 is shaped like a hollow cylinder The disk-shaped part 34b is positioned with its radial direction transverse to the axial axis of the second electrode body 30. The disk shaped part 34b is connected to the second electrode body 30 by means of a plurality of leg-shaped extensions extending in the axial direction A.. The disk-shaped part 34b has a smaller diameter than the second electrode body 30, and is connected to the second electrode body 30 via a number, in this example four, L-shaped legs 36 which are, in a tangential direction denoted with arrow C, positioned at equal distances with respect to each other.

In the example of FIGs. 5 and 6, the spark surfaces 22,32 extend at an angle with respect to the axial direction denoted with arrow A. The first spark surface 22 faces slightly inwards, towards the axial centre of the first spark surface 22, while the second spark surface 32 faces outwards. The spark gap 4 thus has a substantially V-shaped cross-section. Due to this configuration of the spark surfaces 22,32 and the spark gap 4, fuel ignited between the spark surfaces 22,32 will burst in the pre-chamber 7 in radial direction as well as in axial direction, thus distributing ignition in the whole pre-chamber 7. Accordingly, a more uniform ignition of fuel in the pre-chamber 7 is obtained.

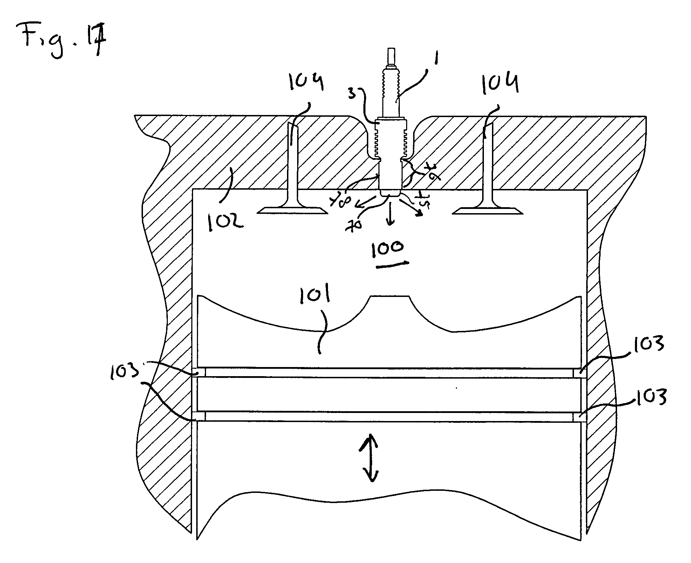

In the example of FIG. 7, the first electrode body 20 extends beyond the insulator body 5. Thereby, the area of the exposed part of the first electrode 2, and accordingly of the first spark surface 22 is increased. The first electrode body 20 has a massive cylindrical shape, and is provided at its exposed end with the annular member 24. Alternatively, the top surface of the first electrode 2 may be level with the top of the insulator body 5. Thereby, the amount of free space in the spark gap 4 is increased, allowing a shorter length of the pre-chamber 7, and accordingly a reduction of the total length of the sparkplug 1.

In the example of FIG. 7 the second electrode body 30 has the shape of a hollow cylinder which extends beyond the insulator body 5 and is has a closed off end at this side. The second spark surface 32 has a closed inner area. The second spark surface 32 includes an annular edge surface 321, which in this example has a cylindrical shape. The annular edge surface 321 lies adjacent to a disk shaped inner surface 321 which fills the inner area 322 and is perpendicular to the annular edge surface 321 formed by the closed off end of the second electrode body 30. The second spark surface 32 and the first spark surface 22 are positioned coaxially. In the examples shown in FIGs. 8 and 9, the first and second spark surface 22,32 are both curved in an axial direction of an annular edge surface 221,321. In the example of FIG. 8 the first and second spark surface are (hemi-)spherical, and parallel to each other. In the example of FIG. 9, the second spark surface 32 is provided on the concave side of a dome-shaped part of the second electrode 3, and the first spark surface 22 has a corresponding convex shape. The spark surface 22,32 have a curved shape. Due to their curved shapes, the first and second spark surfaces 22,32 have no sharp edges. Thereby, the amount of spark surface is increased, and accordingly wear of the spark surfaces 22,32 is reduced as well.

In the example of Figs. 1A,1B and 2, the receptacle pin 21 touches the first electrode body 20. Alternatively, a spark bridge may be provided between the first electrode and the receptacle pin 21 or the power connector 25, to suppress disturbances of the operation of sparkplug 1 caused by electro-magnetic interference. For example, as shown in FIG. 10, between the receptacle pin 21 and the first electrode body 20 an empty space may be provided. In the example of FIG. 10, the space between the receptacle pin 21 and first electrode body 20 forms a spark bridge 26. In this example, in operation, a current will flow from the receptacle pin 21 to the first electrode body 20 via the spark bridge only if a certain threshold voltage is exceeded. Thus, the first electrode body 20 is electrically in contact with the power connector 25, while un-adverted sparking due to electromagnetic interference is reduced.

FIGs. 11 A and B schematically illustrate examples of the power connector 25 and the receptacle pin 21. In the example of FIG. 11a, the power connector 25 and the receptacle pin 21 are made of one piece. Thereby, the power connector 25 and receptacle pin 21 can be manufactured and be mounted in the spark plug in one stage. In the example of FIG. 11 B, the power connector 25 and the receptacle pin 21 are separate components, and in mounted condition the power connector 25 will be fixated onto the receptacle pin 21.

FIGs 12A and B show examples of first electrodes 2. In the example of FIG 12A. The first spark surface 22 is provided on a local thickening of the first electrode body 2, at the pre-chamber side and thereof. In the example of FIG 12A, the local thickening includes an annular member 24 mounted on a pre-chamber side end of the first electrode body 20. The radically inwards facing surface of the annular member 24 is receded outwards. The first electrode body 20 extends through the axial centre of the annular member 24. The first electrode body 20 projects slightly beyond the recess 23 of the annular member 24. The first electrode body 20 abuts on the radially inwards facing surface of the annular member 24, and has a recess which corresponds with the recess 23 of the annular member 24. In the example of FIG. 12B, the first electrode body 20 has an exposed end 27 which projects with respect to the insulator body 5. The first spark surface 22 us provided on the exposed end 27. The electrode body 20 has a substantially constant diameter.

FIGs.. 13A-D show further examples of the second electrode 3. In the example of FIG. 13A and B, the second spark surface 32 is provided on a separate component which is disposed in the pre-chamber member 70, e.g. opposite to the exposable part 75 of the exterior surface 74. The separate component 34 may be fixedly mounted to the pre-chamber member 70 or be releasable. A releasable component has the advantage that if the second spark surface 32 is worn to a certain extend, it can be replaced in a simple manner.

In the example of FIG. 13A, the second electrode 3 includes the pre-chamber member 70 and a separate annular member 34 is positioned in the inside of the pre-chamber member 70. The axial centre of the annular member 34 coincides with the longitudinal axis of the pre-chamber member. The axial direction of the annular member is oriented parallel to the longitudinal axis of the pre-chamber member. The outside edge of the annular member 34 has, in an axial direction of the annular member, a tapered shape. The annular member 34 shown in this example thus has a frusto-conical shape, with a height smaller than the diameter of the annular member 34. Due to the conical shape, the annular member 34 fixates itself when pressed into the inside of the pre-chamber member 70. In the example of FIG. 13B, the annular member 34 is held in position at one side by an inwards receding portion of the pre-chamber member 70, and at another side by a snap ring 37.

In the example of Fig 13C, the second spark surface 32 is provided on the pre-chamber member 70, and forms an integral part thereof. A separate second electrode component which provides the second spark surface 32 is absent in this example, which reduces the amount of separate components compared to the known sparkplug configurations. Accordingly, such a pre-chamber sparkplug 1 has a uncomplicated construction. Furthermore, the integration of the pre-chamber wall 72 and second spark surface 32 allows a reduction of the length of the pre-chamber. Reducing the pre-chamber length is particularly advantageous in case a spark plug is mounted in a combustion chamber with the pre-chamber projecting into the combustion chamber, e.g. FIG. 17, especially in combustion engines having high compression ratios, since the amount of space in a compressed combustion chamber is very limited. Furthermore, the flow of fluids which propels the flame front out of the pre-chamber 7, is therefore less limited by flow restricting components in the pre-chamber 7.

In FIG. 13C, the second spark surface 32 is provided on an inner surface 73 of the pre-chamber wall 72. The inner surface 73 faces the pre-chamber 7 and lies opposite to the exposable part 75. The inner surface 73 has a spark part 77 which includes the second spark surface 32 and lies opposite to the exposable part 75. When operated, fluids enter the pre-chamber 7 via the passages 71. The second spark surface 32 and the spark gap 4 lie close to the passages 71, since the second spark surface 32 is provided on the inner surface 73 of the pre-chamber wall 72. Thus, fresh fuel enters the spark gap 4 in a short period of time. Accordingly, the pre-chamber sparkplug 1 is ready for a next operating cycle in a short period of time after an ignition. In addition, since the second spark surface 32 lies on the pre-chamber wall 72, at least a part of the fuel will be ignited close to the pre-chamber wall 72, and therefore near the passages 71. For that part, few or no flow restricting components are present between the place of ignition and the passages 71. Accordingly, the flow of fluids will be more powerful, and the flame front propelled by the flow will propagate faster into the main combustion chamber.

A spark part 77 of the inner surface 73 opposite to the exposable part 75 which includes the second spark surface 3 can be combined with a first and second spark surfaces 22,32 including an annular edge surface 221,321 and are positioned on different sides of the spark gap 4 diametrically opposite to each other. Thereby, the ignition power is increased even further.

In the example of FIG. 13D, a point-shaped electrode member 34¹ is provided on which the second electrode surface 32 is present. Thus, an effective ignition of sparks is ensured. The point-shaped electrode member 34¹ extends from the pre-chamber wall 72 into the pre-chamber 7 towards the first electrode surface 22. In this example, the point-shaped electrode member 34¹ lies in line with the longitudinal axis of the pre-chamber member 70.

In case an annular electrode member is used to provide the first or second spark surface, any suitable shape may be given to the annular electrode member. In FIGs. 14A-H further examples of suitable shapes are shown. In FIG. 14A and B, the radially inwards facing and outwards facing surfaces of the annular member 34 have a circular shape. In FIG.14B the annular member has a frusto-conical shape. In the examples of FIGs. 14C-H, one or more passages 340 in axial direction of the annular member are provided. Due to the passages 340, the supply of fresh fuel, oxygen and other fluids is increased. In addition, the fluids propelled by ignited fuel can flow more unrestricted and a better ignition in the pre-chamber is improved. The passages can have any suitable shape, and the shapes are not limited to those shown in FIGs. 14C-H. In those examples, the passages are distributed evenly in circumferential direction of the annular member In FIGs.14E and G, the passages 340 are provided on the radially outwards facing edge of the annular member. In the example of FIGs. 14C,D, F and H, the passages are provided spaced from the radially outwards facing edge.

The insulator body 5 can be fixated with respect to the second electrode 3 in any suitable manner. FIGs. 15A-C show examples of suitable means of fixation In the example of FIG. 15A, the insulator body 5 is clamped with respect the second electrode body by means of a nut 51. In the example of FIG. 15B, the insulator body 5 is clamped by means of an open fold 52, and in the example of FIG. 15C, the insulator body 5 is clamped by means of a closed fold 53. Other suitable means may likewise be provided.

The pre-chamber sparkplug 1 may further include a fluid supply channel 6, as schematically shown in FIGs. 3 and 4. In this example, the fluid supply channel 6 extends at least partially through the pre-chamber sparkplug 1. More specific, in FIG. 3 and 4, the fluid supply channel 6 extends through the first electrode 2. The fluid supply channel 6 has a fluid supply outlet 61 mouthing in the pre-chamber 7. In FIG. 3 and 4, the fluid supply channel 6 includes a passage positioning in-line with the longitudinal axis of the first electrode 2. The fluid supply outlet 61 is positioned in the centre of the concentrically positioned first and second spark surfaces 22,32. In this example, the fluid supply outlet 61 has substantially the same diameter as the fluid supply channel 6. Alternatively, the fluid supply channel 6 may, for example, have a tapered shape towards the outlet 61, for instance, for injecting an atomised fluid via the fluid supply channel 6 into the pre-chamber 7.

The fluid supply channel 6 can be connected to any suitable fluid reservoir such as one or more fuel reservoirs, a non-flammable fluid reservoir, a lubricant reservoir or otherwise. Thereby, a suitable fluid can be injected into the pre-chamber 7, for example for lubricating an engine with a suitable lubricant, cooling the engine with a non-flammable fluid, increasing the compression ratio with a non-flammable fluid or otherwise.

Additional fluid supplies may be provided to the main combustion chamber. In addition to the fluid supply channel 6, for example, another fuel supply can be provided mouthing directly into the main combustion chamber, while the fluid channel 6 is connected to a separate second reservoir, for injecting another fluid, such as a lubricant or otherwise.

An ionisation device may be provided in communication with an inside of the fluid supply channel 6 or the fluid supply outlet 61, for ionising a fluid from the fluid supply channel 6. For instance, in the example of FIG. 1A,1B and 2, the sparkplug 1 may be electrically insulated from the main combustion chamber casing. E.g. the outer sealing ring 33 may be made of an insulating material. The second electrode 3 may then be connected to an electrical power source to provide with respect to the main combustion chamber casing 100, while maintaining a voltage difference between the first electrode 2 and the second electrode 3 (to enable sparking). By applying a suitable voltage to the second electrode 3 with respect to the casing of the main combustion chamber, selected types of atoms or molecules in the main combustion chamber can be ionised. Typically, voltages suitable to ionise atoms or molecules are in the range of hundreds of volts to hundreds of kilovolts, and may be constant or varying in time. When ignited fuel burst into the main combustion chamber, the ionised atoms or molecules will exhibit an enhanced reactivity, and the combustion process will be accelerated. For example, by means of high energy electrons, free oxygen radicals may be created which react with fuel molecules, and create a chain-reaction.

The fuel channel 6 may also be provided with a magnetic coil, in order to provide a magnetic field inside the fuel channel 6, which polarises the fuel-molecules. Thereby a more complete combustion will be obtained. Alternatively, the magnetic field may be provided by means of a suitable magnetic device near the fuel channel 6, in the pre-chamber 7 or the main combustion chamber, optionally together with an electric field, for example to create a magnetic trap in the pre-chamber in which charged particles generated by means of the electric field are contained. Thereby, the efficiency of the electric field can be increased.

A pre-chamber sparkplug according to the invention can be used in any type of combustion engine. The combustion engine may for example be suitable to burn a gas, such as hydrogen or propane, a fluid such as Diesel or gasoline, or any other suitable type of fuel. The combustion engine may be any suitable type of engine, and may for instance be a Diesel engine. In the Diesel engines known in the art, during operation, the temperature in the combustion chamber is increased due to the compression of gasses present in the chamber, beyond the ignition point of Diesel fuel. Due to this high temperature, the fuel present in the combustion chamber ignites. Use of a pre-chamber sparkplug according to the invention, allows a precise timing of the ignition, and accordingly improves the efficiency of the Diesel engine.

FIG. 17 schematically shows a combustion engine provided with a sparkplug according to the invention. The shown combustion engine includes

The combustion engine has a main combustion chamber 100, defined by a combustion chamber casing 102. A pre-chamber member 70 is mounted in the combustion chamber casing 102, by means of a thread 78. The pre-chamber number 70 projects into the main combustion chamber 100. In this example, the pre-chamber member 70 is part of a sparkplug 1 which may be implemented, e.g., as shown in FIGs. 1A,1B and 2. The combustion engine further has valves 104 which can open and close-off, not shown, conduits via which fluids, e.g. air and fuel can be supplied to the main combustion chamber 100 or fluids, e.g. exhaust gasses, can be discharged from the main combustion chamber 100.

A piston 101 closes off the main combustion chamber 100. The piston 101 can move with respect to the combustion chamber jacket 102 and thereby increase and decrease the volume of the main combustion chamber. Sailing members 103 are provided between the piston 101 and the combustion chamber jacket 102, to prevent a leakage of fluids.

When fuel is ignited in the pre-chamber 7, this causes an ignition of fuel into the main combustion chamber, as explained with reference to FIGs 1A,1B and 2. The ignited fuel increases the pressure in the main combustion chamber 100, which in turn causes the piston 101 to move such that the volume of the main combustion chamber 100 is increased. Thereafter, the piston 101 is moved back, the volume of the main combustion chamber is decreased, and the main combustion chamber is brought into a compressed stack. When moving the piston 101. the valves 104 open and close the conduits such that the exhaust gasses are removed and fresh fuel and air are brought into the main combustion chamber.

It should be noted that the operation of combustion engines is generally known in the art and for brevity sake is not described in full detail.

The respective parts of the sparkplug may be made of any suitable material. Examples of suitable materials for the various parts of the sparkplug are generally known in the art. In addition, very good results have been achieved with a pre-chamber sparkplug having a first and second spark surface made of a sintered or hard facing metal, in particular a tooling steel material (e.g. S3X7). It has been found that a surface made of such a material has a very high resistance to wear even after a high exposure to sparking. Also electrical conductivity, heat conductivity and other properties such as resistance against fuel are found to be very advantageous. Tooling steel as such is generally known for application in utensils, such as chisels.

It should be noted that the invention is not limited to the above described examples. Various alternatives and modifications will be apparent to the skilled person.

## Claims

1. A pre-chamber sparkplug (1) mountable in a combustion engine, including:
a first electrode (2) which is exposed with a first spark surface (22) in a pre-chamber (7);
a second electrode (3) which is exposed with a second spark surface (32) in said pre-chamber (7), at least one of said electrodes (2,3) being connectable to an electrical power source for applying a voltage difference between said electrodes (2,3);
a spark gap (4) which separates said first spark surface (22) and said second spark surface (32); and
a pre-chamber member (70) including:
a pre-chamber wall (72) defining said pre-chamber (7), and
at least one passage (711,712) in said pre-chamber wall (72), which passage (711,712) connects said pre-chamber (7) with a combustion chamber of a
combustion engine in a mounted condition of said pre-chamber sparkplug (1); in which mounted condition the pre-chamber member (70) projects into the combustion chamber.

2. A pre-chamber sparkplug (1) according to claim 1, wherein said pre-chamber wall (72) has an exterior surface (74) directed away from the pre-chamber (7), said exterior surface (74) including an exposable part (75) which in said mounted condition is exposed to said combustion chamber, said exposable part 75 including a top surface of the pre-chamber wall 72, and a part of a longitudinal side of the pre-chamber wall.

3. A pre-chamber sparkplug (1) according to claim 2, wherein at least one of the passages (711,712) lies at a transition from the longitudinal side to the top surface.

4. A pre-chamber sparkplug, optionally as claimed in any one of claims 1-3, wherein said pre-chamber wall (72) includes at least a part of said second electrode (3) and the prechamber wall (72) has an inner surface (73) facing said pre-chamber (7), said inner surface (73) having a spark part (77) which includes said second spark surface (32) and lies opposite to said exposable part (75).

5. A pre-chamber spark-plug (1) as claimed claim 4, wherein
at least one of said first spark surface (22) and said second spark surface (32) includes an annular edge surface (221,321), and, optionally, said first and/or second spark surface (22,32) is curved in an axial direction (A) of the annular edge surface (221,321).

6. A pre-chamber sparkplug (1) according to claim 5, wherein said first and second spark surface (22,32) each include an annular edge surface (221,321), said first and second spark surface (22,32) are positioned diametrically opposite to each other, and optionally, said second spark surface (32) is separate from said pre-chamber inner surface (73); and said second spark surface (32) is disposed in said pre-chamber (7).

7. A pre-chamber sparkplug (1) according to claim 6, wherein said first spark surface (22) and said second spark surface (32) have an overlap in an axial direction (A) of said first spark surface (22) and/or said first spark surface (22) and said second spark surface (32) have an overlap in a radial direction (B) of said first spark surface (22).

8. A pre-chamber sparkplug (1) according to claims 5,6 or 7, wherein said first spark surface (22) and/or said second spark surface (32) extend at an angle (D) with respect to said axial direction (A).

9. A pre-chamber spark-plug (1) according to any one of the preceding claims, wherein at least one of said passages (711,712) extends through said second spark surface (32).

10. A pre-chamber sparkplug (1) according to any one of the preceding claims, wherein said first electrode (2) includes an electrode body (20) which is provided with a local thickening member (24), and said local thickening member includes said first spark surface (22).

11. A pre-chamber sparkplug (1), optionally according to any one of the preceding claims, wherein said position of at least one of said first spark surface (22) and said second spark surface (32) is adjustable with respect to the other spark surface (22,32).

12. A pre-chamber sparkplug (1), optionally according to any one of the preceding claims, wherein said pre-chamber member (70) includes at least two passages (711,712) which at least differ with respect to each other in diameter and/or orientation and/or length and/or shape.

13. A pre-chamber sparkplug (1) according to any one of the preceding claims, wherein at most halve of the surface of said pre-chamber wall (72) is occupied by said passages (711,712).

14. A pre-chamber sparkplug (1), optionally according to any one of the preceding claims, wherein said pre-chamber member (70) extends from a pre-chamber side end of said pre-chamber sparkplug (1) beyond said spark surfaces (22,32).

15. A pre-chamber sparkplug (1), optionally according to any one of the preceding claims, further including a fluid supply channel (6) mounding in said pre-chamber (7).

16. A pre-chamber sparkplug (1) according to claim 15, wherein said fluid supply channel (6) extends through said first electrode (2) and/or said second electrode (3) and/or an insulator body (5).

17. A pre-chamber sparkplug (1) according to claim 15 or 16, wherein said fluid supply channel (6) mounds in said spark gap (4).

18. A pre-chamber sparkplug (1), optionally according to any one of the preceding claims, wherein at least one of said first and second spark surface (22,32) is made of a material including a sintered or hard facing metal, preferably a tooling steel material.

19. A pre-chamber sparkplug (1), optionally according to any one of the preceding claims, including an electro-magnetic device constructed to generate an electric, magnetic or electro-magnetic field in said pre-chamber (7) and/or said environment of said pre-chamber sparkplug (1), said field being capable of changing at least one aspect of at least one type of fluid present in the pre-chamber or said environment.

20. A combustion engine including at least one combustion chamber (100) provided with a pre-chamber sparkplug (1) according to any one of claims 1-19, of which pre-chamber sparkplug (1) the pre-chamber member (70) projects into the combustion chamber (100)., and the pre-chamber (7) is in contact with said combustion chamber (100) via at least one passage (711,712) in the pre-chamber member (70)

21. A combustion engine according to claim 20, including at least one combustion chamber provided with a pre-chamber sparkplug (1) as claimed claim 15, 16 or 17, and optically any one of the claims 1-14, 18 and 19 further including a fuel supply connectable to a fuel reservoir, said fuel supply mouthing in said combustion chamber and wherein said fluid supply channel is connectable to at least one of: said fuel reservoir, a separate fuel reservoir, a non-flammable fluid reservoir and/or a lubricant reservoir.

22. A method for combusting fuel, including:
igniting fuel in a pre-chamber (7) of a pre-chamber sparkplug (1) according to any one of claims 1-19, of which pre-chamber sparkplug (1) the pre-chamber member (70) projects into a combustion chamber (100);
transporting a flame front of the ignited fuel from the pre-chamber (7) into the combustion chamber (100); and
dispersing the flame front in the combustion chamber (100).
